**Europäisches Patentamt**

**European Patent Office**

**Office européen des brevets**

(19)

(11) Veröffentlichungsnummer: **0 238 811**
**B1**

(12) # EUROPÄISCHE PATENTSCHRIFT

(45) Veröffentlichungstag der Patentschrift:
08.11.89

(51) Int. Cl.⁴: **B01D 53/34**

(21) Anmeldenummer: **87101388.4**

(22) Anmeldetag: **02.02.87**

(54) Verfahren zum Reinigen von S02-haltigen Rauchgasen.

(30) Priorität: **06.03.86 DE 3607357**

(43) Veröffentlichungstag der Anmeldung:
**30.09.87 Patentblatt 87/40**

(45) Bekanntmachung des Hinweises auf die Patenterteilung:
**08.11.89 Patentblatt 89/45**

(84) Benannte Vertragsstaaten:
**AT BE CH DE ES FR GB GR IT LI LU NL SE**

(56) Entgegenhaltungen:
**DE-A- 3 310 716**
**DE-A- 3 431 835**
**FR-A- 2 347 083**
**GB-A- 2 137 973**

(73) Patentinhaber: **Deutsche Babcock Anlagen Aktiengesellschaft, Duisburger Strasse 375, D-4200 Oberhausen 1(DE)**

(72) Erfinder: **Fahlenkamp, Hans, Dr., Wolfersstrasse 4, D-4150 Krefeld(DE)**

(74) Vertreter: **Planker, Karl-Josef, Dipl.-Phys., c/o Deutsche Babcock Anlagen AG Parkstrasse 29 Postfach 4 + 6, D-4150 Krefeld 11(DE)**

**Beschreibung**

Die Erfindung betrifft ein Verfahren zum Reinigen von SO₂-haltigen Rauchgasen gemäß dem Oberbegriff des Patentanspruchs 1.

Bei der Entschwefelung von Rauchgasen aus Feuerungen lassen sich mit Naßverfahren, bei denen die Rauchgase mit einer umgewälzten, wässrigen Absorptionslösung gewaschen werden, hohe Abscheidegrade erzielen. Wird Kalk oder Kalkstein als Absorptionsmittel eingesetzt, so entsteht - bei geeigneter Verfahrensführung - als Reaktionsprodukt weiterverwertbarer Gips.

Bei Verfahren mit Kalkstein als Absorptionsmittel ist zwar als Folge der geringen Löslichkeit gegenüber den Verfahren mit Kalkhydrat ein höherer Investitions- und Energieaufwand erforderlich, dieser Nachteil wird jedoch durch die Betriebsmittelkostenersparnis als Folge des wesentlich geringeren Kalksteinpreises aufgewogen.

Werden allerdings beim Kalksteinverfahren hohe Abscheidegrade (z.B. SO₂-Gehalte im Reingas deutlich unter 100 mg/Nm³) verlangt, so ist es sehr schwierig, die übrigen Anforderungen an den Prozeß - hohe Gipsqualität, geringe Abwassermengen, minimaler Energieaufwand - gleichzeitig zu erfüllen, da diese zum Teil gegensätzliche Anforderungen an die Verfahrensführung stellen. So verbessert sich zwar bei steigendem pH-Wert das Absorptionsvermögen, gleichzeitig sinkt jedoch sowohl die Oxidationsrate - d.h., der Sulfitanteil nimmt unerwünscht gegenüber dem Sulfatanteil bei den Reaktionsprodukten zu - als auch die Löslichkeit des Kalksteins. Gleicht man die verminderte Löslichkeit des Kalksteins durch vermehrte Zugabe aus, so tritt neben anlagentechnischen Schwierigkeiten (z.B. höherer Verschleiß) eine Verminderung der Gipsqualität auf, da der Kalksteinanteil im Gips ebenfalls steigt. Erhöht man das L/G-Verhältnis (=Liter Waschflüssigkeit pro m³ Rauchgas) so erfordert dies einen erheblich größeren Energie- und Investitionsaufwand (z.B. für Pumpen).

Bei Kraftwerkfeuerungen enthalten die Rauchgase neben SO₂ häufig noch merkliche Mengen an HCl; z.B. bei Verfeuerung von europäischer Kohle. Durch das im Rauchgas vorhandene HCl werden die vorhin geschilderten Schwierigkeiten noch verstärkt. Das HCl reagiert mit dem Kalkstein zu hochlöslichem CaCl₂, das aus der Waschflüssigkeit ausgeschleust werden muß, da es den Prozeß negativ beeinflußt. So hat es sich gezeigt, daß die Löslichkeit des Kalksteins - und damit der Abscheidegrad für SO₂ - ab einer gewissen CaCl₂-Konzentration in der Waschflüssigkeit erheblich abnimmt. Dem kann man zwar durch einen erhöhten Flüssigkeitsabzug aus dem Wäschersumpf entgegenwirken, daraus resultiert jedoch u.a. eine größere Abwassermenge, die abwassertechnisch behandelt werden muß. Kompensiert man die geringe Löslichkeit durch ein höheres L/G-Verhältnis oder durch erhöhte Kalksteinzufuhr, so erfordert dies den vorhin erwähnten Mehraufwand an Investitionen und Energie.

In der DE-OS 3310716 ist ein gattungsgemäßes Verfahren beschrieben, bei dem HCl und SO₂ mittels zweistufiger Gaswäsche absorptiv entfernt werden, wobei in der ersten Waschstufe als Waschflüssigkeit suspendiertes Calciumcarbonat eingesetzt wird, und wobei in der zweiten Waschstufe als Waschflüssigkeit suspendiertes Calciumhydroxid verwendet wird. Mit diesem Verfahren sollen sich kostengünstiger hohe Abscheidegrade erreichen lassen, als mit einem Verfahren, das nur Calciumcarbonat oder nur Calciumhydroxid verwendet.

An diesem Verfahren ist nachteilig, daß die vorhin angeführten negativen Folgen der CaCl₂-Anreicherung der Waschflüssigkeit in der Kalksteinstufe in Kauf genommen werden müssen.

Die Erfindung hat sich die Aufgabe gestellt, ein Verfahren zu schaffen, mit dem sich kostengünstig hohe Entschwefelungsgrade erreichen lassen.

Diese Aufgabe wird durch die Merkmalskombination des Patentanspruchs 1 gelöst.

Bei dem erfindungsgemäßen Verfahren werden die negativen Auswirkungen der Chloridionen in der Waschflüssigkeit der Kalksteinstufe durch Zugabe von Natrium-, Kalium-, Magnesium- oder Ammoniumsulfat in die Waschflüssigkeit deutlich verringert. Die Kalksteinstufe läßt sich dann mit einem bedeutend höheren Chloridanteil in der Waschflüssigkeit betreiben, ohne daß negative Auswirkungen auf den Abscheidegrad auftreten, die anderenfalls durch aufwendige Gegenmaßnahmen kompensiert werden müßten. So läßt sich die Abwassermenge bei gleichem Abscheidegrad erheblich verringern.

In der zweiten Stufe werden die bekannten Vorteile einer NaOH-, KOH-, Mg(OH)₂- oder NH₄OH-Wäsche genutzt: Hohes Absorptionsvermögen und einfache Handhabung, da alle Reaktionsprodukte hochlöslich sind. Die zweite Stufe kann zur Verbesserung des Abscheidegrades bei höheren pH-Werten betrieben werden, da die negativen Auswirkungen eines höheren pH-Wertes auf die Gipsbildung und die Kalksteinlöslichkeit nicht auftreten. Die Reaktionsprodukte der zweiten Stufe brauchen nicht gesondert entsorgt zu werden. Sie werden in die erste Waschstufe eingebracht und beeinflussen dort vorteilhaft die Kalksteinlöslichkeit.

Die Unteransprüche 2 bis 5 enthalten vorteilhafte Varianten eines erfindungsgemäßen Verfahrens:

Bei den pH-Werten nach Anspruch 2 sind Abscheidegrad, Gipsbildung und Kalksteinlöslichkeit optimal aufeinander abgestimmt, ohne daß unerwünschte Nebeneffekte (z.B. Ablagerungen) auftreten.

Während bei einem Verfahren nach Anspruch 3 kein Abwasser anfällt und die Bildung von Calciumsulfit in der ersten Stufe vermieden wird, verhindert das Merkmal des Anspruchs 4 die Bildung von Sulfiten auch in der zweiten Stufe bei schwach sauerstoffhaltigen Rauchgasen. Diese Sulfite würden nach Einleitung in die erste Stufe dort unerwünschterweise Calciumsulfit bilden.

Mit einem Verfahren nach Anspruch 5 lassen sich kostengünstig hohe Abscheidegrade erzielen. Durch den Einsatz eines Venturi-Wäschers in der zweiten Stufe werden gleichzeitig Feinststäube aus dem Rauchgas ausgewaschen.

Die Zeichnung dient zur weiteren Erläuterung der Erfindung.

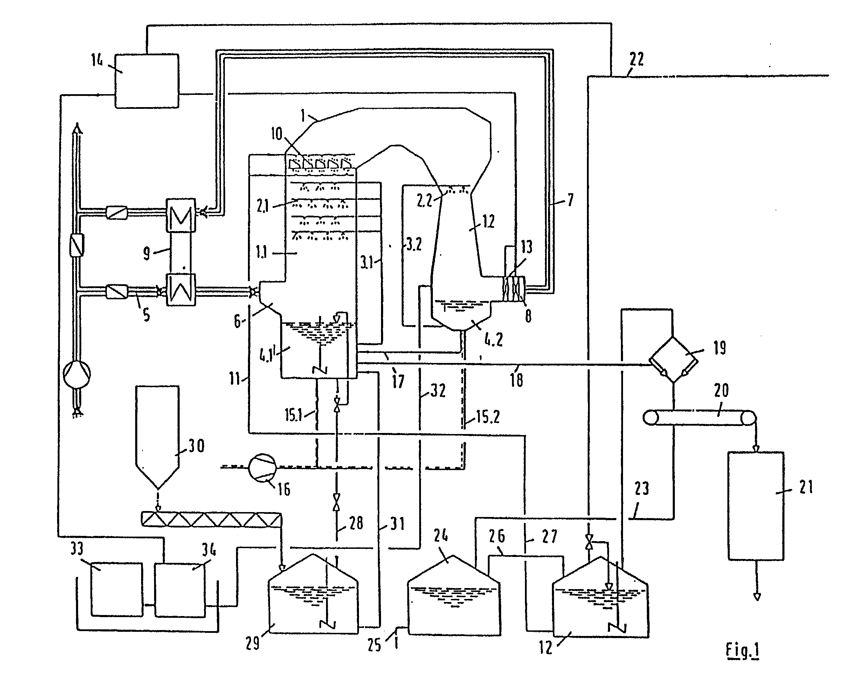

Figur 1 zeigt grob vereinfacht das Fließschema einer Rauchgasentschwefelungsanlage.

Die Rauchgasentschwefelungsanlage weist als zentralen Anlagenteil einen zweistufigen Gaswäscher 1 auf, dessen erste Stufe als Gegenstromwaschturm 1.1 und dessen zweite Stufe als Venturi-Wäscher 1.2 ausgebildet ist. Beide Wäscherstufen 1.1, 1.2 sind mit einer oder mehreren Düsenebenen 2.1, 2.2 bestückt, die über Umwälzleitungen 3.1, 3.2 mit den zugehörigen Wäschersümpfen 4.1, 4.2 verbunden sind. Im Waschturm 1.1 endet ein Rohgaskanal 5 in einem Rohgaseintritt 6 zwischen Waschturmsumpf 4.1 und den Düsenebenen 2.1. Ein Reingaskanal 7 ist an einem Reingasaustritt 8 des Venturi-Wäschers 1.2 zwischen Wäschersumpf 4.2 und Düsenebene 2.2 angeschlossen. Rohgaskanal 5 und Reingaskanal 6 sind über einen Wärmetauscher 9 thermisch gekoppelt.

Ein Tropfenfänger 10, der über eine Leitung 11 aus einem Kreislaufbehälter 12 mit Kreislaufflüssigkeit bespült wird, befindet sich im Waschturm 1.1 oberhalb der Düsenebenen 2.1. Ein zweiter Tropfenfänger 13 am Ausgang des Venturi-Wäschers 1.2 wird mit enthärtetem Wasser aus einer Wasseraufbereitung 14 bespült.

In beide Wäschersümpfe 4.1, 4.2 mündet jeweils eine Luftzufuhr 15.1, 15.2 mit einem gemeinsamen Gebläse 16. Eine Abschlämmleitung 17 führt vom Sumpf 4.2 des Venturi-Wäschers 1.2 zum Sumpf 4.1 des Waschturms 1.1. Dort ist ebenfalls eine Teilstromabzugsleitung 18 zu einer Gipsentwässerung, bestehend aus einem Hydrozyklon 19 und nachfolgendem Bandfilter 20, angeschlossen. Im Anschluß an die Gipsentwässerung 19, 20 folgt ein Gipslager 21. Der Überlauf des Hydrozyklons 19 führt zum Kreislaufbehälter 12, an dem eine Frischwasserzufuhr 22 angeschlossen ist. Die Filtratleitung 23 des Bandfilters 20 mündet in einer Abwasservorlage 24, von der eine Leitung 25 zu einem nicht dargestellten Eindampfer führt und die über eine Leitung 26 mit dem Kreislaufbehälter 12 verbunden ist. Von diesem führt eine Leitung 27, von der die Leitung 11 zum Tropfenfänger 10 und eine Leitung 28 zu einem Suspensionsbehälter 29 abzweigt, zum Waschturmsumpf 4.1 zurück. Im Suspensionsbehälter 29 endet eine Förderstrecke aus einer Kalksteinstation 30, zugleich ist er über eine Leitung 31 mit dem Waschturmsumpf 4.1 verbunden.

In den Venturi-Wäscher 1.2 mündet eine Leitung 32 für verdünnte Natronlaugelösung aus einer Natronlaugestation, bestehend aus Vorlagebehälter 33 und Verdünnungsbehälter 34, der aus der Wasseraufbereitung 14 mit enthärtetem Wasser versorgt wird.

Die Rohgase, im vorliegenden Beispiel Rauchgase aus einer Kraftwerkssteinkohlenfeuerung mit ca. 2.000 mg/Nm³ $SO_2$ und ca. 200 mg/Nm³ HCl, werden, nachdem sie über den Wärmetauscher 9 die gereinigten Rauchgase aufgeheizt haben, in den Waschturm 1.1 eingeleitet, wo sie mit einer umgewälzten wässrigen Kalksteinsuspension im Gegenstrom gewaschen werden. $SO_2$ im Rauchgas wird dabei durch Reaktion zu Calciumsulfat und -sulfit abgeschieden, das durch den Sauerstoff der in den Sumpf 4.1 eingeblasenen Luft ebenfalls zu Sulfat

oxidiert. Das HCl des Rauchgases reagiert nahezu vollständig zu $CaCl_2$, das als Folge seiner hohen Löslichkeit in der Waschflüssigkeit gelöst vorliegt. $CaCl_2$ entsteht nur intermediär, da es - wie später näher erläutert - sofort mit Natriumsulfat weiter zu NaCl und $CaSO_4$ reagiert. Im Sumpf 4.1 des Waschturms 1.1 wird durch gesteuerte Kalksteinsuspensionszufuhr aus dem Suspensionsbehälter 29 ein pH-Wert zwischen 5 und 6 eingestellt. In diesem Bereich werden sowohl gute Abscheidegrade als auch hohe Oxidationsraten erreicht, d.h. der Sulfitanteil ist gegenüber dem Sulfatanteil bei den Rekationsprodukten sehr gering.

Im vorliegenden Ausführungsbeispiel wird der Waschturm 1.1 so betrieben, daß die Rauchgase beim Verlassen einen Restgehalt an $SO_2$ von ca. 200 mg/Nm³ aufweisen. Vorhandenes HCl wird nahezu vollständig abgeschieden. Aus dem Waschturmsumpf 4.1 werden Reaktionsprodukte in einem Teilstrom der Waschflüssigkeit ausgeschleust. Aus dem Teilstrom mit dem Hydrozyklon 19 und dem Bandfilter 20 Gips abgetrennt. Das Filtrat aus der Gipsabtrennung - es enthält das gelöste NaCl - wird in der Abwasservorlage 24 gesammelt. Dort wird die für die Chloridausschleusung erforderliche Abwassermenge abgezogen und eingedampft. Das übrige überschüssige Wasser wird über den Kreislaufbehälter 12, wo durch Frischwasserzufuhr Wasserverluste ausgeglichen werden, in den Waschturm 1.1 zurückgeführt.

Die im Waschturm 1.1 vorgereinigten Rauchgase treten, nachdem im Tropfenabscheider 10 die mitgerissenen Flüssigkeitstropfen abgeschieden wurden, in den Venturi-Wäscher 1.2 ein. Dort werden sie im Gleichstrom mit einer umgewälzten wässrigen Natronlaugelösung in Kontakt gebracht. Dadurch werden von dem verbliebenen $SO_2$ durch Reaktion zu Natriumsulfat weitere 80 % - 90 % entfernt. In der umgewälzten Waschflüssigkeit wird durch Zufuhr von 10 %-tiger Natronlauge ein pH-Wert zwischen 6 und 9, vorzugsweise zwischen 7 und 8, eingestellt. Das gebildete, in der Waschflüssigkeit gelöst vorliegende Natriumsulfat wird aus dem Wäschersumpf 4.2 ausgeschleust und in den Waschturmsumpf 4.1 eingeleitet. Im Waschturm 1.1 reagiert das Natriumsulfat mit dem gelösten $CaCl_2$ zu NaCl und Gips, der als Feststoff ausfällt. In der Waschflüssigkeit des Waschturms 1.1 liegen daher die Chloridionen als Natriumchlorid und nicht als Calciumchlorid vor. Das gelöste NaCl hat einen wesentlich geringeren negativen Einfluß auf die Kalksteinlöslichkeit als gelöstes $CaCl_2$, so daß der Waschturm 1.1 ohne Absinken des Abscheidegrades oder aufwendige Kompensationsmaßnahmen mit einer höheren Chloridfracht in der Waschflüssigkeit - mehr als 50 g/l, berechnet als Cl⁻ - betrieben werden kann. Dies hat den Vorteil, daß das nach der Gipsabtrennung verbleibende und nicht in den Waschturm 1.1 zurückgeführte Abwasser kostengünstig eingedampft werden kann. Es ist so möglich, die Anlage bei verringerten Kosten abwasserfrei zu betreiben.

Damit sich im Venturi-Wäscher 1.2 keine schlechtlöslichen Calciumsalze bilden, d.h. damit eine klare, problemlos zu handhabende Waschflüssigkeit vorliegt, wird sowohl bei der Verdünnung der Natronlauge als auch beim Spülen des Tropfenfängers 13 enthärtetes Wasser eingesetzt, das keine Calciumionen enthält. Gleichzeitig wird - insbesondere bei schwach sauerstoffhaltigen Rauchgasen - Luft ebenfalls in den Venturi-Wäscher 1.2 eingeblasen, um gebildetes Natriumsulfit zu Sulfat zu oxidieren. Natriumsulfit würde im Waschturm 1.1 zu Calciumsulfit reagieren, wodurch die Gipsqualität beeinträchtigt würde.

Anstelle des Venturi-Wäschers 1.2 des vorliegenden Ausführungsbeispieles, der vorteilhafterweise eingesetzt wird, um zugleich mitgerissene Feinststäube aus dem Rauchgas auszuwaschen, können als zweite Stufe ebenfalls ein Gegenstromwaschturm oder ein Füllkörperwäscher eingesetzt werden; z.B. zur Verminderung des Druckabfalls in der zweiten Stufe.

Ebenso ist es möglich, anstelle der verdünnten Natronlaugelösung eine wässrige KOH-, Mg(OH)$_2$- oder NH$_4$OH-Lösung als Waschflüssigkeit in der zweiten Stufe 1.2 zu verwenden.

## Patentansprüche

1. Verfahren zum Reinigen von SO$_2$-haltigen Rauchgasen,
- bei dem die Rauchgase in zwei aufeinander folgenden Stufen mit umgewälzten wässrigen Absorptionslösungen gewaschen werden, wobei in der ersten Stufe eine wässrige Kalksteinsuspension verwendet wird, und
- bei dem die Reaktionsprodukte der zweiten Stufe in die Waschflüssigkeit der ersten Stufe eingeleitet werden, gekennzeichnet durch die Verwendung einer wässrigen NaOH-, KOH-, Mg(OH)$_2$- oder NH$_4$OH-Lösung als Absorptionslösung in der zweiten Stufe.

2. Verfahren nach Anspruch 1, dadurch gekennzeichnet, daß die erste Stufe bei pH = 5-6 und die zweiten Stufe bei pH = 6-9, vorzugsweise pH = 7-8, betrieben wird.

3. Verfahren nach Anspruch 1 oder 2, dadurch gekennzeichnet, daß in der ersten Stufe in die Waschflüssigkeit Luft eingeblasen wird und die Reaktionsprodukte in einem Teilstrom ausgeschleust werden, der, nach dem Gips abgetrennt wurde, eingedampft wird.

4. Verfahren nach Anspruch 3, dadurch gekennzeichnet, daß in die Waschflüssigkeit der zweiten Stufe ebenfalls Luft eingeblasen wird.

5. Verfahren nach einem der Ansprüche 1 bis 4, dadurch gekennzeichnet, daß die Absorptionslösung in der erste Stufe im Gegenstrom zu den Rauchgasen und in der zweite Stufe im Gleichstrom zu den Rauchgasen eingesprüht wird.

## Claims

1. A process for purifying smoke gases containing SO$_2$,
- in which the smoke gases are washed in two subsequent stages with aqueous absorption-solutions which had been made to circulate, an aqueous limestone-suspension being used in the first stage, and
- in which the reaction products of the second stage are introduced into the washing liquid of the first stage, characterized by the use of an aqueous NaOH, KOH, Mg(OH)$_2$ or NH$_4$OH solution as an absorption solution in the second stage.

2. A process in accordance with Claim 1, characterized in that the first stage is carried out at pH 5–6 and the second stage at pH 6–9, preferably pH 7–8.

3. A process in accordance with Claim 1 or 2, characterized in that in the first stage air is blown into the washing liquid and the reaction products are removed in a partial stream which is evaporated after separation of the gypsum.

4. A process in accordance with Claim 3, characterized in that air also is blown into the washing liquid of the second stage.

5. A process in accordance with one of Claims 1 to 4, characterized in that the absorption solution is sprayed in in counter flow to the smoke gases in the first stage and in the same flow direction as the smoke gases in the second stage.

## Revendications

1. Procédé de purification de gaz de fumée contenant du SO$_2$,
– dans lequel les gaz de fumée sont lavés dans deux étages successifs par des solutions aqueuses d'absorption mises en circulation, une suspension aqueuse de calcaire étant utilisée dans le premier étage, et
– dans lequel les produits réactionnels du deuxième étage sont introduits dans le liquide de lavage du premier étage, caractérisé par l'utilisation d'une solution aqueuse de NaOH, KOH, Mg(OH)$_2$ ou NH$_4$OH comme solution d'absorption dans le deuxième étage.

2. Procédé suivant la revendication 1, caractérisé en ce que le premier étage est mis en service à pH = 5–6 et le deuxième étage à pH = 6–9, de préférence à pH = 7–8.

3. Procédé suivant l'une des revendications 1 et 2, caractérisé en ce que, dans le premier étage, de l'air est insufflé dans le liquide de lavage et en ce que les produits réactionnels sont éclusés dans un courant partiel qui, après séparation du gypse, est évaporé.

4. Procédé suivant la revendication 3, caractérisé en ce que de l'air également insufflé dans le liquide de lavage du deuxième étage.

5. Procédé suivant l'une des revendications 1 à 4, caractérisé en ce que la solution d'absorption est injectée dans le premier étage en contre-courant des gaz de fumée et dans le deuxième étage dans un courant à sens identique aux gaz de fumée.

Fig.1